# EUROPÄISCHE PATENTSCHRIFT

(11) **EP 4 091 239 B1**
(45) Veröffentlichungstag und Bekanntmachung des Hinweises auf die Patenterteilung: **03.09.2025**
(21) Anmeldenummer: 21715147.1
(22) Anmeldetag: 11.03.2021
(51) Int. Cl.: B62D 57/024, H02K 15/50

(54) **PRÜFFAHRZEUG**
INSPECTION VEHICLE
VÉHICULE D'INSPECTION

(30) Priorität: 19.03.2020 DE 102020203559
(43) Veröffentlichungstag der Anmeldung: 23.11.2022
(73) Patentinhaber: Siemens Energy Global GmbH & Co. KG, 81739 München (DE)
(72) Erfinder: OTTO, Michael, 45472 Mülheim an der Ruhr (DE); ZIEHLKE, Stefan, 46145 Oberhausen (DE); BORGMANN, Christian, 46284 Dorsten (DE); CLOSSEN-VON LANKEN SCHULZ, Michael, 47661 Issum (DE); DREISCHER, Paul, 44892 Bochum (DE); OBERMAYR, Stefan, 47199 Duisburg (DE)
(86) Internationale Anmeldenummer: PCT/EP2021/056202
(87) Internationale Veröffentlichungsnummer: WO 2021/185671

(56) Entgegenhaltungen:
- EP-A1- 2 345 902
- DE-A1- 102009 023 194
- JP-A- 2002 233 115
- US-A1- 2009 146 680
- WOLFGANG FISCHER ET AL: "Locomotion System for a Mobile Robot on Magnetic Wheels With Both Axial and Circumferential Mobility and With Only an 8-mm Height for Generator Inspection With the Rotor Still Installed", IEEE TRANSACTIONS ON INDUSTRIAL ELECTRONICS, IEEE SERVICE CENTER, PISCATAWAY, NJ, USA, vol. 58, no. 12, 1 December 2011 (2011-12-01), pages 5296 - 5303, XP011383230, ISSN: 0278-0046, DOI: 10.1109/TIE.2010.2051396

## Beschreibung

Die Erfindung betrifft ein Prüffahrzeug, das dazu ausgelegt ist, auf einem zumindest teilweise ferromagnetischen Untergrund platziert und bewegt zu werden, umfassend
- zumindest eine Messtechnik, die dazu ausgelegt ist, physikalische und/oder chemische Eigenschaften der Umgebung zu erfassen,
- eine Antriebseinheit und
- zumindest einen Magneten, insbesondere Neodym-Magneten, der an der Unterseite des Prüffahrzeugs angeordnet und dazu ausgelegt ist, das Prüffahrzeug am Untergrund zu halten.

Der Läufer und der Stator eines Generators werden in regelmäßigen Revisionsintervallen und gegebenenfalls beim Auftreten außergewöhnlicher Ereignisse, wie beispielsweise im Falle eines Lastabwurfs, einer visuellen Prüfung unterzogen, um insbesondere thermische Verfärbungen, mechanische Veränderungen in Form von Kratzern, Schlägen, Teileverschiebungen oder dergleichen, losen Teilen, Fremdkörpern etc. festzustellen und zu orten. Zur Ermöglichung eines visuellen Zugangs wird der Läufer aus dem Stator ausgebaut bzw. gezogen. Es erfolgt eine visuelle Inspektion durch das Prüfpersonal durch Inaugenscheinnahme. Mögliche Befunde werden fotographisch dokumentiert. Erst nach abgeschlossener Prüfung und Bewertung der Prüfergebnisse und gegebenenfalls erforderlicher Reparaturarbeiten kann der Generator wieder zusammengebaut und in Betrieb genommen werden. Das Ziehen des Läufers ist mit großem Aufwand und hohen Kosten verbunden. Vor diesem Hintergrund wäre es wünschenswert, die Inspektion im zusammengebauten Zustand des Generators durchführen zu können, so dass im Falle einer Befundfreiheit auf den Ausbau des Läufers verzichtet werden kann.

Eine Möglichkeit einer visuellen Inspektion im zusammengebauten Zustand besteht grundsätzlich in der Verwendung eines konventionellen Industrieendoskops. Dies gilt jedoch nicht für Generatoren mit Läuferlängen von mehreren Metern.

Darüber hinaus wird der Einsatz von Prüffahrzeugen zur Befundung von Bauteilen und/oder bei Revisionsarbeiten immer beliebter. Diese ermöglichen eine Verkürzung der Revisionsdauer aufgrund einer Beschleunigung des Prüfprozesses, aber auch durch einen Wegfall der Demontage verschiedener Anlagenbestandteile, beispielsweise des Ausbaus des Läufers eines Generators. Außerdem werden mittels Prüffahrzeugen Mess- und Prüfergebnisse unter ähnlichen Bedingungen aufgezeichnet und sind daher von gleichbleibender Qualität und hervorragender langfristiger Vergleichbarkeit. Schließlich sind Prüffahrzeuge vorteilhaft im Hinblick auf Umwelt-, Gesundheits- und Arbeitsschutzaspekte, da häufig das Betreten von engen Räumen vermieden werden kann.

Für eine vollumfassende Inspektion ist es wichtig, dass das Prüffahrzeug flexibel auf dem Untergrund, insbesondere der Oberfläche eines Läufers, verfahren werden kann, insbesondere auch ein Verfahren über Kopf möglich ist.

Der Anmelderin sind Prüffahrzeuge zur Inspektion von Generatoren im eingebauten Zustand bekannt, die dazu ausgelegt sind, auf einem zumindest teilweise ferromagnetischen Untergrund, genauer gesagt auf dem Außenumfang des Läufers eines Generators, platziert und darauf in allen Richtungen frei bewegt zu werden. Hierfür umfassen diese Prüffahrzeuge neben einer Messtechnik und einer im Vergleich zu dem zuvor beschriebenen Crawler-System modifizierten Antriebseinheit auch zumindest einen Magneten, der an der Unterseite des Prüffahrzeugs angeordnet und dazu ausgelegt ist, das Prüffahrzeug am Untergrund zu halten. Der zumindest eine Magnet zieht mit seiner Haltekraft das Prüffahrzeug zum Untergrund. Somit stellt der zumindest eine Magnet den für den Vortrieb des Prüffahrzeugs gewünschten Anpressdruck sicher und sorgt dafür, dass das Prüffahrzeug über Kopf entlang eines ferromagnetischen Untergrunds bewegt werden kann, ohne dass es abfällt.

Falls nicht der gesamte Untergrund, auf dem das Prüffahrzeug bewegt werden soll, ferromagnetisch ist, ergeben sich Bereiche, an die ein Magnet des Prüffahrzeugs hervorragend angezogen wird, und Bereiche, an die ein Magnet das Prüffahrzeugs kaum oder gar nicht angezogen wird. Beispielsweise besteht der Großteil des Läufervolumens eines Läufers eines Generators aus massivem Stahl, wobei an der Oberfläche des Läufers Läufernutverschlusskeile aus Kupfer eingebracht sind. Während Kupfer mit einer magnetischen Permeabilität von nahezu 1 nicht ferromagnetisch ist, verfügt Stahl über eine relativ hohe magnetische Permeabilität und ist daher ferromagnetisch. An einen Stahlbereich wird ein Magnet des Prüffahrzeugs somit hervorragend angezogen, nicht jedoch an einen Kupferbereich. Ob das vorbekannte Prüffahrzeug mit dem zumindest einen Magneten über Kopf gehalten wird oder nicht, hängt also davon ab, an welchen Bereichen des Untergrunds sich der zumindest eine Magnet des Prüffahrzeugs gerade befindet.

Um eine zuverlässige Halterung des Prüffahrzeugs unabhängig von der aktuellen Position des Prüffahrzeugs auf dem Untergrund zu gewährleisten, wurde bereits in Erwägung gezogen, durch eine relativ hohe Anzahl von Magneten, die an der Unterseite des Prüffahrzeugs angeordnet sind, die oben beschriebenen Permeabilitätssprünge des Untergrunds zu überbrücken, sodass zu jedem Zeitpunkt einer Bewegung des Prüffahrzeugs auf dem Untergrund eine ausreichende Anzahl von Magneten an dem Untergrund haften, um das Prüffahrzeug an dem Untergrund zu halten. Hierbei ergibt sich allerdings das Problem, dass es in Abschnitten des Untergrunds, in denen ausschließlich ferromagnetische Bereiche vorgesehen sind, beispielsweise im Polbereich des Läufers, in dem der Läufer nicht mit Läufernutverschlusskeilen versehen ist, zu einer relativ hohen Magnetwirkung kommt, was zu einem Stillstand des Prüffahrzeugs führen kann.

Die US 2009/146680 A1 offenbart ein Prüffahrzeug, bei dem Magnete die Antriebsräder bilden.

Aus der Veröffentlichung von WOLFGANG FISCHER ET AL: "Locomotion System for a Mobile Robot on Magnetic Wheels With Both Axial and Circumferential Mobility and With Only an 8-mm Height for Generator Inspection With the Rotor Still Installed", IEEE TRANSACTIONS ON INDUSTRIAL ELECTRONICS, IEEE SERVICE CENTER, PISCATAWAY, NJ, USA, Bd. 58, Nr. 12, 1. Dezember 2011 (2011-12-01), Seiten 5296-5303, ISSN: 0278-0046, DOI: 10.1109/TIE.2010.2051396, ist ein Prüffahrzeug bekannt, das dazu ausgelegt ist, auf einem zumindest teilweise ferromagnetischen Untergrund platziert und bewegt zu werden.

Die Veröffentlichung DE 10 2009 023194 A1 offenbart eine Vorrichtung zur Inspektion eines schmalen Luftspaltes zwischen zwei Oberflächen. Die Vorrichtung wird insbesondere im Luftspalt von Generatoren angewendet. Es sind mehrere Magneten an einer Sensorplattform in einer Ausnehmung verschiebbar angeordnet, und zwar zur Positionierung der Magneten bezüglich der ferromagnetischen Oberfläche und somit zur Führung der Sensorplattform entlang der Oberfläche, die inspiziert werden soll.

Ausgehend von diesem Stand der Technik ist es eine Aufgabe der vorliegenden Erfindung, ein Prüffahrzeug der eingangs erwähnten Art bereitzustellen, das auf einem inhomogen ferromagnetischen Untergrund zuverlässig in allen Richtungen fortbewegt werden kann.

Zur Lösung dieser Aufgabe schafft die vorliegende Erfindung ein Prüffahrzeug nach Anspruch 1. Bei diesem ist der zumindest eine Magnet innerhalb einer Halterung, insbesondere Schiene, in einer Bewegungsrichtung frei beweglich geführt. Die Halterung kann mittels eines additiven Herstellungsverfahrens, beispielsweise mit einem 3D-Drucker, hergestellt sein. Durch die magnetische Anziehungskraft zwischen dem zumindest einen in der einen Bewegungsrichtung frei beweglich geführten Magneten und den ferromagnetischen Bereichen des Untergrunds wird der zumindest eine Magnet automatisch ausgerichtet, d.h. er bewegt sich innerhalb seiner Halterung automatisch in eine Position über dem nächstliegenden ferromagnetischen Bereich des Untergrunds. Auf diese Weise wird stets eine ausreichende und innerhalb eines Toleranzbereichs gleichbleibende Anpresskraft oder Haftwirkung des Prüffahrzeugs an dem Untergrund sichergestellt. Im Falle eines Einsatzes des erfindungsgemäßen Prüffahrzeugs auf einem Läufer eines Generators lässt sich dieses zuverlässig sowohl in axialer als auch in radialer Richtung verfahren. Das erfindungsgemäße Prüffahrzeug ist nicht nur auf Untergründen mit inhomogenem Ferromagnetismus der zuvor beschriebenen Art einsetzbar, sondern auch auf Untergründen, die neben ferromagnetischen Bereichen auch Schlitz-, Loch- oder andere Störkonturbereiche aufweisen. Dabei sind mehrere Magneten vorgesehen, die jeweils innerhalb einer Halterung in einer Bewegungsrichtung frei beweglich geführt sind, wobei die Halterungen jeweils paarweise in einer Richtung quer, insbesondere senkrecht zur Bewegungsrichtung der Magnete und/oder in der Bewegungsrichtung der Magnete versetzt zueinander angeordnet sind. Auf diese Weise wird ermöglicht, dass die Magnete an möglichst unterschiedlichen Bereichen des Untergrunds haften, was zu einem sicheren Halt des Prüffahrzeugs am Untergrund beiträgt.

Die Stärke, die Anordnung und/oder die Anzahl des/der Magneten kann derart gewählt sein, dass das Prüffahrzeug über Kopf entlang des Untergrunds bewegt werden kann.

Vorteilhaft weist die Messtechnik zumindest eine Kamera und eine Beleuchtungseinheit zur Ausleuchtung des Bildbereichs der zumindest eine Kamera auf, wobei die Beleuchtungseinheit in die Kamera integriert sein kann. Zusätzlich oder alternativ zu einer oder zu mehreren Kameras kann die Prüftechnik aber auch andere Prüfgeräte aufweisen, beispielsweise Ultraschallprüfgeräte oder dergleichen.

Bevorzugt umfasst das Prüffahrzeug ein insbesondere im Wesentlichen rechteckig ausgebildetes Gehäuse, das eine zur Hauptfahrrichtung weisende Gehäusevorderseite, eine gegenüberliegende Gehäuserückseite, einander gegenüber angeordnete, die Gehäusevorderseite und die Gehäuserückseite miteinander verbindende Gehäuselängsseiten, eine Gehäuseunterseite, die in dem auf dem Untergrund platzierten Zustand des Prüffahrzeugs zum Untergrund weist, und eine gegenüberliegende Gehäuseoberseite aufweist.

Die Bewegungsrichtung des zumindest einen Magneten kann quer, insbesondere senkrecht zur Hauptfahrrichtung verlaufen. Es ist auch denkbar, dass die Bewegungsrichtung zumindest eines Magneten der Hauptfahrrichtung entspricht und die Bewegungsrichtung zumindest eines weiteren Magneten quer, insbesondere senkrecht zur Hauptfahrrichtung verläuft.

Gemäß einer Ausgestaltung der vorliegenden Erfindung ist die Messtechnik zumindest überwiegend in dem Gehäuse aufgenommen.

Vorteilhafterweise ist das Prüffahrzeug dazu ausgelegt, in einen Luftspalt zwischen zwei gegenüberliegenden Spaltwänden eingesetzt und auf der Oberfläche einer ersten Spaltwand als Untergrund platziert und bewegt zu werden, um die erste Spaltwand und/oder die gegenüberliegende zweite Spaltwand auf Beschädigungen zu prüfen, und ist die Kamera im Inneren des Gehäuses angeordnet und auf einen Spiegel gerichtet, der im Inneren des Gehäuses zwischen zwei einander gegenüberliegend an der Gehäuseunterseite und an der Gehäuseoberseite vorgesehenen Fenstern angeordnet und derart um eine Spiegelschwenkachse insbesondere motorisch schwenkbar gehalten ist, dass die Kamera in Abhängigkeit von der Schwenkstellung des Spiegels die erste Spaltwand durch das untere Fenster oder die zweite Spaltwand durch das obere Fenster betrachtet. Entsprechend können mit einer einzelnen Kamera sowohl die Außenumfangsfläche des Läufers als auch die Innenumfangsfläche des Stators inspiziert werden.

Die Kamera kann relativ zum Spiegel insbesondere motorisch vor und zurück bewegbar sein. Da sich die Außenumfangsfläche des Läufers und die Innenumfangsfläche des Stators in unterschiedlichen Abständen zum Gehäuse befinden, kann auf diese Weise der Fokus der Kamera in Abhängigkeit zu der zu inspizierenden Fläche justiert werden.

Zweckmäßigerweise ist die Kamera in Hauptfahrrichtung ausgerichtet, ist die Gehäuseoberseite oberhalb der Kamera mit einer Durchgangsöffnung versehen, und ist die Kamera insbesondere motorisch auf- und abwärts zwischen einer ersten Stellung, in der sie innerhalb des Gehäuses angeordnet und auf den Spiegel gerichtet ist, und einer zweiten Stellung, in der sie außerhalb des Gehäuses angeordnet ist, durch die Durchgangsöffnung bewegbar. In der ersten Stellung kann mit der Kamera somit der Läufer oder der Stator inspiziert werden. In der zweiten Stellung ist die Kamera in Hauptfahrrichtung ausgerichtet, so dass ein Bediener sehen kann, wohin er das Prüffahrzeug lenken muss. Insgesamt ist somit nur eine einzelne Kamera erforderlich. Grundsätzlich ist es natürlich, aber auch möglich, mehrere Kameras vorzusehen, beispielsweise eine Kamera zur Prüfung der Läuferoberfläche, eine zur Prüfung der Statoroberfläche und eine weitere für den Blick in Hauptfahrrichtung.

Gemäß einer weiteren Ausgestaltung der vorliegenden Erfindung ist das Prüffahrzeug dazu ausgelegt, in den Luftspalt zwischen einem die erste Spaltwand definierenden Läufer und einem die zweite Spaltwand definierenden Stator einer elektrischen Maschine, insbesondere eines Generators eingesetzt und auf dem im Wesentlichen zylindrischen Außenumfang des Läufers platziert und bewegt zu werden, um den Außenumfang des Läufers und/oder den Innenumfang des Stators auf Beschädigungen zu prüfen, und umfasst die Antriebseinheit zumindest vier Antriebsgruppen, die paarweise einander gegenüberliegend an den Gehäuselängsseiten gehalten sind, weist jede Antriebsgruppe zumindest zwei Räder auf, die durch separate Motoren drehend um sich parallel zueinander und senkrecht zur Hauptfahrrichtung erstreckende Radachsen antreibbar sind, und ist jede Antriebsgruppe schwenkbar um eine sich parallel zu den Radachsen erstreckende erste Schwenkachse an einem Zwischenelement befestigt, das wiederum schwenkbar um eine sich parallel zu der ersten Schwenkachse erstreckende zweite Schwenkachse sowie auf- und abwärts schwenkbar um eine sich senkrecht zur zweiten Schwenkachse erstreckende dritte Schwenkachse am Gehäuse befestigt ist, wobei die Schwenkbewegung einer Antriebsgruppe um ihre dritte Schwenkachse mit der Schwenkbewegung der gegenüberliegenden Antriebsgruppe um ihre dritte Schwenkachse gekoppelt ist. Diese Ausbildung und Anordnung der Antriebsgruppen ermöglicht e s, das erfindungsgemäße Prüffahrzeug auf einem gekrümmten Untergrund, beispielsweise auf der Oberfläche eines Läufers, in jeder Richtung zu fahren, zu lenken und zu wenden. Es kann somit, nachdem es auf den gekrümmten Untergrund aufgesetzt wurde, in allen Richtungen frei bewegt werden. Dies ermöglicht auch die Inspektion des Läufers und des Stators von Generatoren, bei denen der Luftspalt zwischen dem Läufer und dem Stator nur über einen einseitigen Zugang auf der 12-Uhr-Position zugänglich ist, ohne hierfür den Läufer ziehen zu müssen. Entsprechend kann die Inspektion beispielsweise im Vergleich zu dem vorbekannten Crawler-System schnell und preiswert durchgeführt werden. Die Bedienung des Prüffahrzeugs und der Messtechnik erfolgt bevorzugt vollständig ferngesteuert, also kabellos. Die Lenkung wird vorteilhaft realisiert, indem analog zu einem Kettenfahrzeug die Räder der Antriebsgruppen beider Seiten mit unterschiedlichen Geschwindigkeiten angetrieben werden.

Zweckmäßigerweise ist zumindest ein Magnet an der Unterseite des Gehäuses angeordnet und/oder ist zumindest ein Magnet an der Unterseite einer Antriebsgruppe, insbesondere jeder Antriebsgruppe, angeordnet. Eine möglichst breit verteilte Anordnung von Magneten trägt zu einem sicheren Halt des Prüffahrzeugs an dem Untergrund bei.

Die Zwischenelemente einander gegenüber angeordneter Antriebsgruppen können über einen Hebelmechanismus derart miteinander gekoppelt sein, dass, wenn eine der beiden Antriebsgruppen um ein vorbestimmtes Maß um die ihr zugeordnete dritte Schwenkachse abwärts geschwenkt wird, die andere der beiden Antriebsgruppen um ein entsprechendes Maß aufwärts um die ihr zugeordnete dritte Schwenkachse geschwenkt wird, und umgekehrt. Entsprechend wird auch bei Schrägfahrten über beispielsweise einen Läufer sichergestellt, dass die Antriebsgruppen und somit ihre jeweiligen Räder stets optimal positioniert sind.

Gemäß einer weiteren Ausgestaltung der vorliegenden Erfindung weist jede Antriebsgruppe drei Räder auf, die jeweils paarweise in der Hauptfahrrichtung und/oder in der Bewegungsrichtung der Magnete versetzt zueinander angeordnet sind und jeweils durch separate Motoren drehend um ihre Radachsen angetrieben werden. Auf diese Weise wird sichergestellt, dass, auch wenn sich eines der Räder beispielsweise in einer Luftkühlbohrung eines Läufers verklemmen sollte, der Vortrieb des Fahrzeugs über die anderen Räder gewährleistet ist.

Die Messtechnik und die Motoren können über zumindest einen innerhalb des Gehäuses angeordneten Akkumulator mit Energie versorgt werden.

Vorteilhaft beträgt die Gesamthöhe des Prüffahrzeugs, wenn es auf einen ebenen Untergrund aufgesetzt ist, weniger als 20mm, besser noch weniger als 16mm. Entsprechend lassen sich fast alle industriellen Generatoren mit dem erfindungsgemäßen Prüffahrzeug inspizieren.

Weitere Merkmale und Vorteile der Erfindung werden anhand der nachfolgenden Beschreibung einer Ausführungsform des erfindungsgemäßen Prüffahrzeugs unter Bezugnahme auf die beiliegende Zeichnung deutlich. Darin ist
- Figur 1: eine perspektivische Rückansicht eines Prüffahrzeugs gemäß einer Ausführungsform der vorliegenden Erfindung von schräg oben, wobei sich eine Kamera in einer ersten unteren Stellung befindet;
- Figur 2: eine Ansicht analog zu Figur 1, wobei sich die Kamera in einer zweiten oberen Stellung befindet;

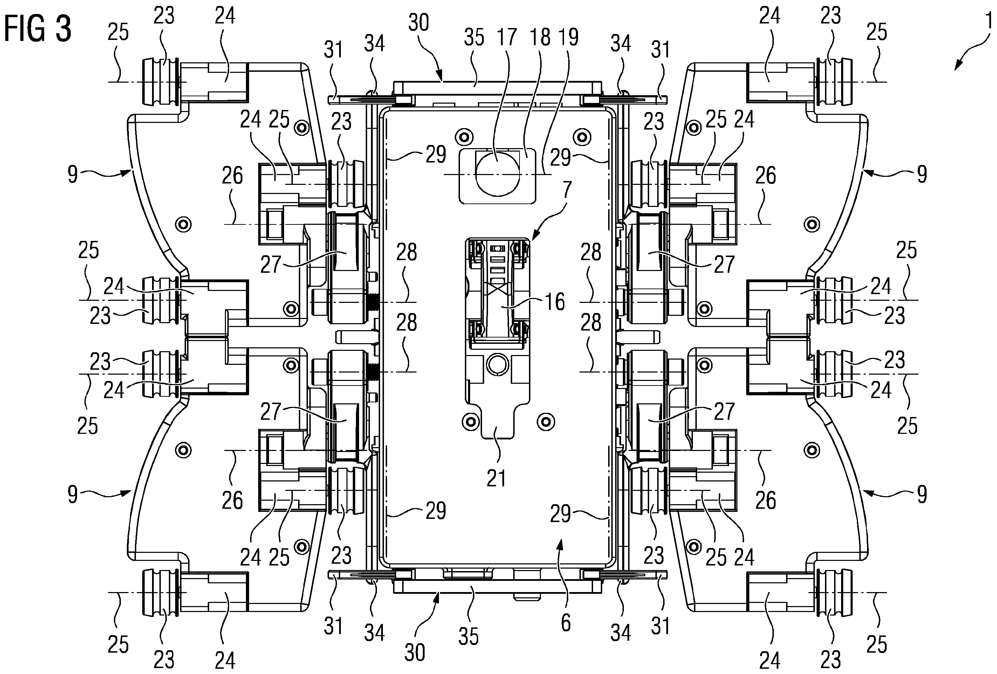

- Figur 3: eine Draufsicht des in Figur 2 gezeigten Prüffahrzeugs;

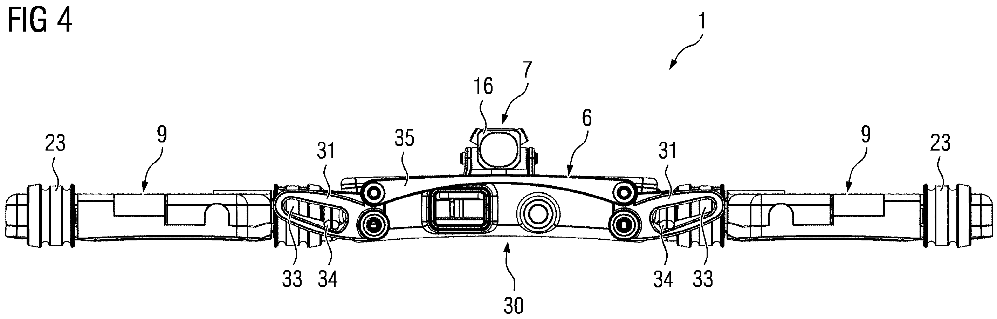

- Figur 4: eine Vorderansicht des in Figur 2 gezeigten Prüffahrzeugs;
- Figur 5: eine Untersicht einer Antriebsgruppe des in den Figuren 1 bis 4 gezeigten Prüffahrzeugs und
- Figur 6: eine perspektivische Ansicht des in Figur 1 dargestellten Prüffahrzeugs während einer Schrägfahrt über einen Läufer.

Die Figuren zeigen ein Prüffahrzeug 1 gemäß einer Ausführungsform der vorliegenden Erfindung, das dazu ausgelegt ist, in den Luftspalt zwischen zwei gegenüberliegenden Spaltwänden eines Luftspalts zwischen einem Läufer 2 und einem Stator einer elektrischen Maschine, insbesondere eines Generators eingesetzt und auf einem teilweise ferromagnetischen Untergrund, vorliegend auf der Oberfläche einer ersten Spaltwand, genauer gesagt auf dem im wesentlichen zylindrischen Außenumfang 3 des Läufers 2 platziert und bewegt zu werden, um die erste Spaltwand, also den Außenumfang 3 des Läufers 2, und/oder die gegenüberliegende zweite Spaltwand, also den Innenumfang des Stators auf Beschädigungen zu prüfen. Der Außenumfang 3 des Läufers 2 umfasst ferromagnetische Läuferkörperbereiche 4 aus Stahl und nicht ferromagnetische Läufernutverschlusskeilbereiche 5 aus Kupfer. Das Prüffahrzeug 1 umfasst als Hauptkomponenten ein Gehäuse 6, eine Messtechnik 7, die im Gehäuse 6 aufgenommen ist, und eine Antriebseinheit 8 mit vier Antriebsgruppen 9.

Das Gehäuse 6 ist im Wesentlichen rechteckig ausgebildet. Es umfasst eine in durch den Pfeil 10 gekennzeichnete Hauptfahrrichtung weisende Gehäusevorderseite 11, eine gegenüberliegende Gehäuserückseite 12, einander gegenüber angeordnete, die Gehäusevorderseite 11 und die Gehäuserückseite 12 miteinander verbindende Gehäuselängsseiten 13, eine im eingesetzten Zustand des Prüffahrzeugs 1 zum Läufer weisende Gehäuseunterseite 14 und eine gegenüberliegende Gehäuseoberseite 15.

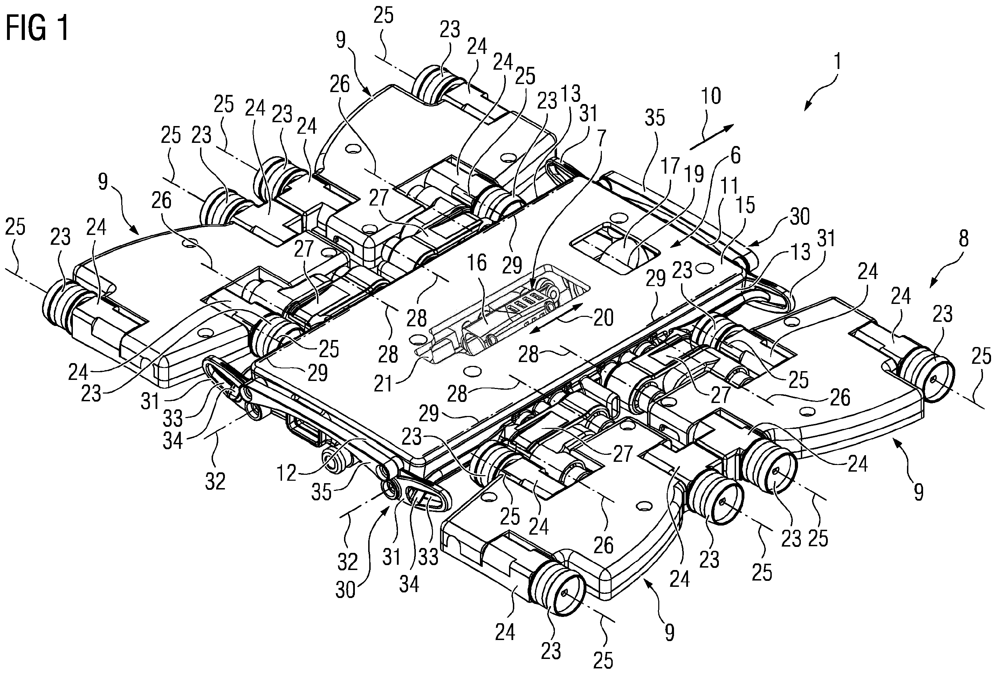

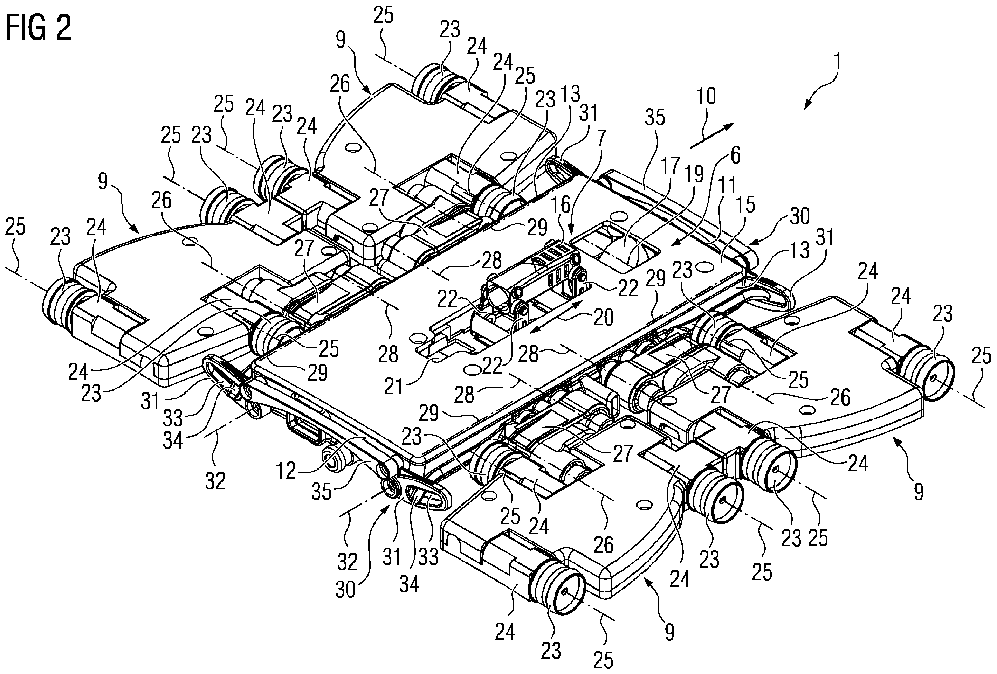

Innerhalb des Gehäuses 6 ist die Messtechnik 7 aufgenommen, die dazu ausgelegt ist, physikalische und/oder chemische Eigenschaften der Umgebung zu erfassen, und die vorliegend eine Kamera 16 mit integrierter Beleuchtungseinheit zur Ausleuchtung des Bildbereichs der Kamera 16 sowie einen Spiegel 17 aufweist. Die Kamera 16 ist in Hauptfahrrichtung 10 auf den Spiegel 17 gerichtet, der im Inneren des Gehäuses 6 zwischen zwei einander gegenüberliegend an der Gehäuseunterseite 14 und an der Gehäuseoberseite 15 vorgesehenen Fenstern 18 angeordnet und derart um eine sich quer zur Hauptfahrrichtung 10 erstreckende Spiegelschwenkachse 19 motorisch schwenkbar gehalten ist, dass die Kamera 16 in Abhängigkeit von der Schwenkstellung des Spiegels 17 wahlweise den Läufer 2 durch das untere Fenster 18 oder den Stator durch das obere Fenster 18 betrachtet, wenn das Prüffahrzeug 1 auf einen Läufer 2 aufgesetzt ist. Die Kamera 16 ist entlang nicht näher dargestellter Führungen motorisch relativ zum Spiegel 17 in Richtung des Pfeils 20 vor- und zurück bewegbar, um den Fokus der Kamera 16 optimal einstellen zu können. Alternativ kann auf eine solche Beweglichkeit aber auch verzichtet und ein fester Fokus eingestellt werden. Ferner ist die Kamera 16 motorisch auf- und abwärts zwischen einer ersten unteren Stellung, in der sie innerhalb des Gehäuses 6 angeordnet und auf dem Spiegel 17 gerichtet ist, und einer zweiten oberen Stellung bewegbar, in der sie durch eine oberhalb der Kamera 16 an der Gehäuseoberseite 15 vorgesehene Durchgangsöffnung 21 aus dem Gehäuse 6 geführt ist. Die erste Stellung ist in Figur 1 dargestellt, die zweite Stellung in Figur 2. Die Auf- und Abwärtsbewegung wird vorliegend über motorisch angetriebene Schwenkhebel 22 realisiert. In der ersten Stellung kann mit der Kamera 16 somit der Läufer 2 oder der Stator inspiziert werden. In der zweiten Stellung ist die Kamera 16 in Hauptfahrrichtung 10 ausgerichtet, so dass ein Bediener sehen kann, wohin er das Prüffahrzeug 1 lenken muss.

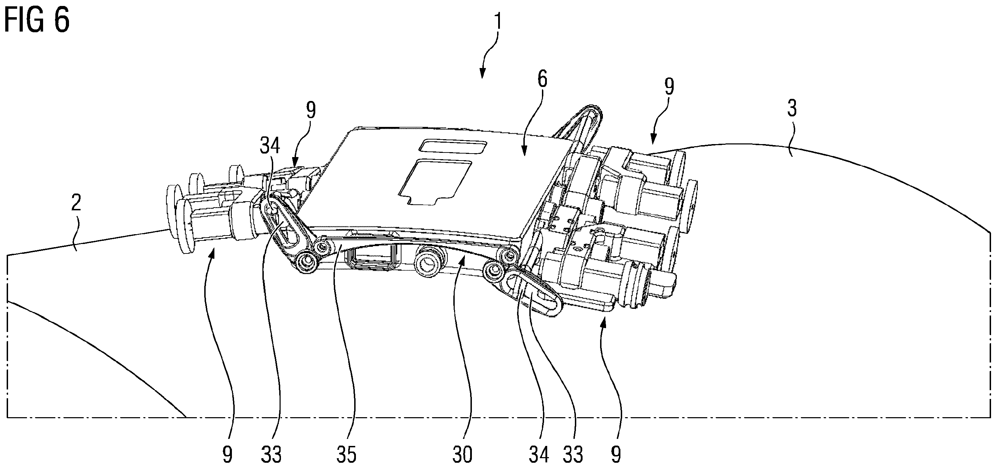

Die Antriebsgruppen 9 sind paarweise einander gegenüberliegend an den Gehäuselängsseiten 8 gehalten. Jede Antriebsgruppe 9 weist vorliegend drei in Hauptfahrrichtung 10 versetzt zueinander angeordnete Räder 23 auf, wobei die Räder 23 teilweise auch in einer Richtung senkrecht zur Hauptfahrrichtung 10 versetzt zueinander angeordnet sind. Die Räder 23 sind jeweils durch separate Motoren 24 drehend um sich parallel zueinander und senkrecht zur Hauptfahrrichtung 10 erstreckender Radachsen 25 antreibbar. Jede Antriebsgruppe 9 ist schwenkbar um eine sich parallel zu den Radachsen 25 erstreckende erste Schwenkachse 26 an einem Zwischenelement 27 befestigt, das wiederum schwenkbar um eine sich parallel zu der ersten Schwenkachse 26 erstreckende zweite Schwenkachse 28 sowie auf- und abwärts schwenkbar um eine sich senkrecht zur zweiten Schwenkachse 28 in Hauptfahrrichtung 10 erstreckende dritte Schwenkachse 29 am Gehäuse 6 befestigt ist. Die Schwenkbewegung einer Antriebsgruppe 9 um ihre dritte Schwenkachse 29 ist mit der Schwenkbewegung der gegenüberliegenden Antriebsgruppe 9 um ihre dritte Schwenkachse 29 gekoppelt. Diese Kopplung erfolgt vorliegend jeweils über einen Hebelmechanismus 30, wobei sich der Hebelmechanismus 30 der vorderen beiden Antriebsgruppen 9 entlang der Gehäusevorderseite 11 und der Hebelmechanismus 30 der hinteren beiden Antriebsgruppen 9 entlang der Gehäuserückseite 12 erstreckt. Jeder Hebelmechanismus 30 umfasst zwei L-förmige Hebel 31, die jeweils drehbar um sich parallel zueinander in Hauptfahrrichtung 10 erstreckende Drehachsen 32 an der Gehäusevorderseite 11 bzw. der Gehäuserückseite 12 befestigt sind. Seitlich auswärts gerichtete Schenkel der jeweiligen Hebel 31 sind mit Langlöchern 33 versehen, in die ein freies Ende eines Betätigungsabschnitts 34 eines zugeordneten Zwischenelements 27 greift. An den jeweils anderen Schenkeln sind die Hebel 31 eines Hebelmechanismus 30 über eine Verbindungsstange 35 gelenkig miteinander verbunden. Wird somit eine von zwei einander gegenüber angeordneten Antriebsgruppen 9 um ein vorbestimmtes Maß um die ihr zugeordnete dritte Schwenkachse 29 abwärts geschwenkt, so wird die andere der beiden Antriebsgruppen 9 um ein entsprechendes Maß aufwärts um die ihr zugeordnete Schwenkachse 29 geschwenkt und umgekehrt, wie es insbesondere in Figur 6 gut zu erkennen ist.

Die Abmessungen des Gehäuses 6 und der Antriebsgruppen 9 sind derart gewählt, dass die Gesamthöhe H des Prüffahrzeugs 1, wenn sich die Kamera 16 in ihrer ersten Stellung befindet, weniger als 20 mm beträgt, besser noch weniger als 16 mm.

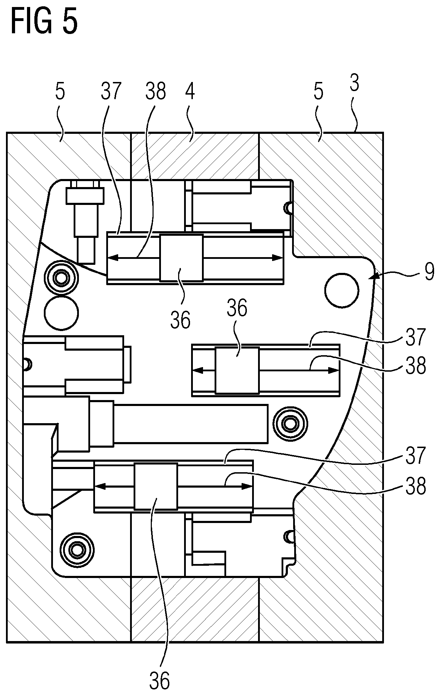

Darüber hinaus umfasst das Prüffahrzeug 1 eine Vielzahl von Magneten 36, vorliegend Neodym-Magneten, die an den Unterseiten des Gehäuses 6 und der Antriebsgruppen 9 angeordnet und dazu ausgelegt sind, das Prüffahrzeug 1 am Untergrund zu halten. Genauer gesagt sind an der Unterseite des Gehäuses 6 und an der Unterseite jeder Antriebsgruppe 9 vorliegend jeweils drei Magnete 36 angeordnet, wie in Figur 5 beispielhaft für eine Antriebsgruppe 9 gezeigt ist. Erfindungsgemäß sind die Magnete 36 jeweils innerhalb einer Halterung 37, vorliegend einer geradlinigen Schiene, in einer durch den Doppelpfeil 38 gekennzeichneten Bewegungsrichtung, die vorliegend senkrecht zur Hauptfahrrichtung 10 verläuft, frei beweglich geführt. Hierbei sind die Halterung 37 jeweils paarweise in der Hauptfahrrichtung 10 des Prüffahrzeugs 1 und in der Bewegungsrichtung 38 der Magnete 36 derart versetzt zueinander angeordnet, dass das Prüffahrzeug 1 das auf einem inhomogen ferromagnetischen Untergrund zuverlässig in allen Richtungen fortbewegt werden kann. Durch die magnetische Anziehungskraft zwischen den Magneten 36 und den ferromagnetischen Läuferkörperbereichen 4 des Außenumfangs 3 des Läufers 2 bewegen sich die Magnete 36 innerhalb ihrer Halterungen 37 automatisch in eine Position über dem nächstliegenden ferromagnetischen Läuferkörperbereich 4, entfernen sich also gleichzeitig von einem nicht ferromagnetischen Läufernutverschlusskeilbereich 5. Resultierenden Positionen der drei Magnete 36 sind beispielhaft der Figur 5 zu entnehmen, in der ein ferromagnetischer Läuferkörperbereich 4 und zwei nicht ferromagnetische Läufernutverschlusskeilbereiche 5 lediglich zur Orientierung als schraffierte Fläche dargestellt sind. Auf diese Weise wird stets eine passende Anpresskraft des Prüffahrzeugs 1 an den Außenumfang 3 des Läufers 2 sichergestellt. Die Stärke, die Anordnung und/oder die Anzahl der Magnete 36 ist derart gewählt, dass das Prüffahrzeug 1, wenn es gemäß Figur 6 auf einen Läufer 2 aufgesetzt ist, mittels der Magnete 36 am Läufer 2 gehalten und auch über Kopf entlang des Außenumfangs 3 des Läufers 2 bewegt werden kann.

Die Ansteuerung der Messtechnik 7 und der Antriebsgruppen 9 erfolgt vorliegend funk- bzw. ferngesteuert, also kabellos.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Im Rahmen einer visuellen Inspektion von Generatoren ohne Ausbau des Generatorrotors aus seinem Gehäuse wird das innere des Generators mit einem Prüffahrzeug befahren.

Dieses Prüffahrzeug wird hierzu in den Generator eingeführt und fährt auf dem Generatorrotor.

Das Prüffahrzeug inspiziert innerhalb des Generators sowohl den Generatorläufer als auch den Generatorstator.

Hierzu werden die zu inspizierenden Bereiche mithilfe einer Leuchtquelle ausgeleuchtet, die sich am Prüffahrzeug befindet.

Am Generatorrotor befinden sich Kühlbohrungen, über die ein wesentlicher Anteil der Kühlwirkung bei luftgekühlten Generatoren während des Betriebs umgesetzt wird.

Die Kühlluftlöcher sind von beiden Seiten zugänglich, insbesondere auf der einen Seite der Kühlluftlöcher durch einen Nutkanal zugänglich sind.

Wenn diese Kühlbohrungen durch Fremdkörper, Verschmutzungen oder andere Ablagerungen derart verstopft werden, dass ein kontinuierlicher Luftstrom nicht mehr gewährleistet ist, droht eine örtliche Er- bzw. Überhitzung des Generatorläufers.

Hieraus können sich beispielsweise Unwuchten ergeben, die ihrerseits zu massiven Schäden an der gesamten Maschine führen können.

Um diese Kühlbohrungen mithilfe des besagten Prüffahrzeugs inspizieren zu können, muss sehr tief in die Kühlbohrungen und die dahinterliegenden Rotorwicklungen hineingeschaut werden, um den kompletten Aufbau des dahinterliegenden Nutkanals beurteilen zu können.

Diese Ausleuchtung durch das Prüffahrzeug alleine ist insbesondere deswegen schwierig, weil die Platzverhältnisse innerhalb des Generators sehr beengt sind.

Durch Einbringen einer Beleuchtungsquelle in den Nutkanal kann das Inspektionsergebnis der Kühlbohrungen dahingehend signifikant verbessert werden, dass ein voller Überblick bis in den Nutgrund gewährleistet werden kann.

Die Beleuchtung kann hierbei insbesondere mit einer Aneinanderreihung von Leuchtdioden realisiert werden, die unter der Generatorkappe in den Nutkanal des Generatorläufers eingeführt werden, während auf der Oberfläche des Läufers das Prüffahrzeug fährt.

Dabei kann ein handelsüblicher LED-Lichtschlauch verwendet werden.

Das Verfahren wird so durchgeführt, dass eine Beleuchtungsquelle in den Nutkanal des Generators eingebracht wird, während gleichzeitig ein Prüffahrzeug auf der Oberfläche des Generatorrotors fährt.

Der wesentliche Schritt liegt in der Idee begründet die Kühlbohrungen nicht nur "von vorne" (aus Sicht des Prüffahrzeugs) zu beleuchten, sondern zusätzlich vom Nutkanal her.

Hierdurch wird ein deutlich tieferer Einblick auf die innere Struktur und den inneren Zustand der Wicklungen des Generatorläufers möglich.

Vergleicht man diese Methode insbesondere mit dem, vor der Einführung von Robotersystemen, unbedingt nötigen Ausbau des Läufers ("Läufer ziehen"), war es bisher so, dass bei der Inspektion des Generatorläufers mithilfe von roboterbasierten Systemen Abstriche hinzunehmen waren. Durch die in dieser Idee beschriebenen Hintergrundbeleuchtung allerdings werden diese Abstriche dahingehen eliminiert, dass es sich bei den Inspektionsergebnissen um eine gleichwertige Bewertungsgrundlage handelt.

## Patentansprüche

1. Prüffahrzeug (1),
das dazu ausgelegt ist,
auf einem zumindest teilweise ferromagnetischen Untergrund (3) platziert und bewegt zu werden,
umfassend
- zumindest eine Messtechnik (7), die dazu ausgelegt ist, physikalische und/oder chemische Eigenschaften der Umgebung zu erfassen,
- eine Antriebseinheit (8),
- zumindest eine Halterung (37) und
- zumindest einen Magneten (36),
insbesondere Neodym-Magneten,
der an der Unterseite des Prüffahrzeugs (1) angeordnet und dazu ausgelegt ist,
das Prüffahrzeug (1) am Untergrund (3) zu halten,
wobei der zumindest eine Magnet (36) innerhalb der Halterung (37), insbesondere Schiene, in einer Bewegungsrichtung (38) frei beweglich geführt ist,
mehrere Magneten (36) vorgesehen sind,
die jeweils innerhalb einer Halterung in einer Bewegungsrichtung frei beweglich geführt sind,
**dadurch gekennzeichnet, dass**
die deren Halterungen (37) jeweils paarweise in einer Richtung quer,
insbesondere senkrecht zur Bewegungsrichtung (38) der Magnete (36) und/oder in der Bewegungsrichtung (38) der Magnete (36) versetzt zueinander angeordnet sind.

2. Prüffahrzeug (1) nach Anspruch 1,
**dadurch gekennzeichnet, dass**
die Stärke, die Anordnung und/oder die Anzahl des/der Magneten (36) derart gewählt ist,
dass das Prüffahrzeug (1) über Kopf entlang des Untergrunds (3) bewegt werden kann.

3. Prüffahrzeug (1) nach einem der vorhergehenden Ansprüche, **dadurch gekennzeichnet, dass**
die Messtechnik (7) zumindest eine Kamera (16) und
eine Beleuchtungseinheit zur Ausleuchtung des Bildbereichs der zumindest eine Kamera (16) aufweist,
wobei die Beleuchtungseinheit in die Kamera (16) integriert sein kann.

4. Prüffahrzeug (1) nach einem der vorhergehenden Ansprüche, **dadurch gekennzeichnet, dass**
das Prüffahrzeug (1) ein insbesondere im Wesentlichen rechteckig ausgebildetes Gehäuse (6) umfasst,
das eine zur Hauptfahrrichtung (10) weisende Gehäusevorderseite (11),
eine gegenüberliegende Gehäuserückseite (12), einander gegenüber angeordnete, die Gehäusevorderseite (11) und die Gehäuserückseite (12) miteinander verbindende Gehäuselängsseiten (13), eine Gehäuseunterseite (14),
die in dem auf dem Untergrund (3) platzierten Zustand des Prüffahrzeugs (1) zum Untergrund (3) weist, und
eine gegenüberliegende Gehäuseoberseite (15) aufweist.

5. Prüffahrzeug (1) nach Anspruch 4,
**dadurch gekennzeichnet, dass**
die Bewegungsrichtung (38) des zumindest einen Magneten (36) quer,
insbesondere senkrecht zur Hauptfahrrichtung (10) verläuft.

6. Prüffahrzeug (10) nach Anspruch 4 oder 5,
**dadurch gekennzeichnet, dass**
die Messtechnik (7) zumindest überwiegend in dem Gehäuse (6) aufgenommen ist.

7. Prüffahrzeug (1) nach Anspruch 3 und einem der Ansprüche 4 bis 6,
**dadurch gekennzeichnet, dass**
das Prüffahrzeug (1) dazu ausgelegt ist,
in einen Luftspalt zwischen zwei gegenüberliegenden Spaltwänden eingesetzt und auf der Oberfläche einer ersten Spaltwand als Untergrund platziert und
bewegt zu werden,
um die erste Spaltwand und/oder
die gegenüberliegende zweite Spaltwand
auf Beschädigungen zu prüfen, und
die Kamera (16) im Inneren des Gehäuses (6) angeordnet und auf einen Spiegel (17) gerichtet ist,
der im Inneren des Gehäuses (6) zwischen zwei einander gegenüberliegend an der Gehäuseunterseite (14) und
an der Gehäuseoberseite (15) vorgesehenen Fenstern (18) angeordnet und derart um eine Spiegelschwenkachse (19) insbesondere motorisch schwenkbar gehalten ist,
dass die Kamera (16) in Abhängigkeit von der Schwenkstellung des Spiegels (17) die erste Spaltwand durch das untere Fenster (18) oder die zweite Spaltwand durch das obere Fenster (18) betrachtet.

8. Prüffahrzeug (1) nach Anspruch 7,
**dadurch gekennzeichnet, dass**
die Kamera (16) relativ zum Spiegel (17) insbesondere motorisch vor und zurück bewegbar ist.

9. Prüffahrzeug (1) nach einem der Ansprüche 7 bis 8,
**dadurch gekennzeichnet, dass**
das Prüffahrzeug (1) dazu ausgelegt ist, in den Luftspalt zwischen einem die erste Spaltwand definierenden Läufer (2) und einem die zweite Spaltwand definierenden Stator einer elektrischen Maschine, insbesondere eines Generators eingesetzt und auf dem im Wesentlichen zylindrischen Außenumfang (3) des Läufers (2) platziert und bewegt zu werden, um den Außenumfang (3) des Läufers (2) und/oder den Innenumfang des Stators auf Beschädigungen zu prüfen, und dass
die Antriebseinheit (8) zumindest vier Antriebsgruppen (9) umfasst,
die paarweise einander gegenüberliegend an den Gehäuselängsseiten (13) gehalten sind,
jede Antriebsgruppe (9) zumindest zwei Räder (23) aufweist, die durch separate Motoren (24) drehend um sich parallel zueinander und senkrecht zur Hauptfahrrichtung (10) erstreckende Radachsen (25) antreibbar sind, und
jede Antriebsgruppe (9) schwenkbar um eine sich parallel zu den Radachsen (25) erstreckende erste Schwenkachse (26) an einem Zwischenelement (27) befestigt ist,
das wiederum schwenkbar um eine sich parallel zu der ersten Schwenkachse (26) erstreckende zweite Schwenkachse (28) sowie auf- und abwärts schwenkbar um eine sich senkrecht zur zweiten Schwenkachse (28) erstreckende dritte Schwenkachse (29) am Gehäuse (6) befestigt ist,
wobei die Schwenkbewegung einer Antriebsgruppe (9) um ihre dritte Schwenkachse (29) mit der Schwenkbewegung der gegenüberliegenden Antriebsgruppe (9) um ihre dritte Schwenkachse (29) gekoppelt ist.

10. Prüffahrzeug (1) nach Anspruch 9,
**dadurch gekennzeichnet, dass**
zumindest ein Magnet (36) an der Unterseite (14) des Gehäuses (6) angeordnet ist und/oder
zumindest ein Magnet (36) an der Unterseite einer Antriebsgruppe (9),
insbesondere jeder Antriebsgruppe (9),
angeordnet ist.

11. Prüffahrzeug (1) nach Anspruch 9 oder 10,
**dadurch gekennzeichnet, dass**
die Zwischenelemente (27) einander gegenüber angeordneter Antriebsgruppen (9) über einen Hebelmechanismus (30) derart miteinander gekoppelt sind,
dass, wenn eine der beiden Antriebsgruppen (9) um ein vorbestimmtes Maß um die ihr zugeordnete dritte Schwenkachse (29) abwärts geschwenkt wird,
die andere der beiden Antriebsgruppen (9) um ein entsprechendes Maß aufwärts um die ihr zugeordnete dritte Schwenkachse (29) geschwenkt wird,
und umgekehrt.

12. Prüffahrzeug (1) nach einem der Ansprüche 9 bis 11,
**dadurch gekennzeichnet, dass**
jede Antriebsgruppe (9) drei Räder (23) aufweist,
die jeweils paarweise in der Hauptfahrrichtung (10) und/oder in der Bewegungsrichtung (38) der Magnete (36) versetzt zueinander angeordnet sind und
jeweils durch separate Motoren (24) drehend um ihre Radachsen (25) angetrieben werden.

13. Prüffahrzeug (1) nach einem der Ansprüche 9 bis 12,
**dadurch gekennzeichnet, dass**
die Messtechnik (7) und
die Motoren (24)
über zumindest einen innerhalb des Gehäuses (6) angeordneten Akkumulator mit Energie versorgt werden.

14. Prüffahrzeug (1) nach einem der vorhergehenden Ansprüche, **dadurch gekennzeichnet, dass**
dessen Gesamthöhe,
wenn es auf einen ebenen Untergrund (3) aufgesetzt ist,
weniger als 20mm, besser noch weniger als 16mm beträgt.

## Claims

1. An inspection vehicle (1)
which is designed to be placed onto and moved along a surface (3) that is ferromagnetic at least in part,
the inspection vehicle comprising
- at least one measurement instrument (7) which is designed to measure physical and/or chemical properties of the surroundings,
- a drive unit (8)
- at least one holder (37), and
- at least one magnet (36), in particular a neodymium magnet, which is located on the underside of the inspection vehicle (1) and is designed to hold the inspection vehicle (1) on the surface (3),
wherein the at least one magnet (36) is guided in the holder (37), in particular a rail, so as to be freely movable in one direction of movement (38),
wherein multiple magnets (36) are provided, each of which is guided in a holder so as to be freely movable in one direction of movement,
**characterised in that**
the holders (37) thereof are each located in pairs offset from one another in one direction transverse to, in particular perpendicular to, the direction of movement (38) of the magnets (36) and/or in the direction of movement (38) of the magnets (36).

2. The inspection vehicle (1) according to claim 1,
**characterised in that**
the strength, the location, and/or the number of the magnet(s) (36) is selected such that
the inspection vehicle (1) can be moved along the surface (3) upside down.

3. The inspection vehicle (1) according to any one of the preceding claims,
**characterised in that**
the measurement instrument (7) has at least one camera (16) and a lighting unit for illuminating the image area of the at least one camera (16),
wherein the lighting unit may be integrated into the camera (16).

4. The inspection vehicle (1) according to any one of the preceding claims,
**characterised in that**
the inspection vehicle (1) comprises a housing (6), formed in particular substantially rectangular, having a housing front side (11) facing the main direction of travel (10), an opposite housing rear side (12), longitudinal housing sides (13) located opposite one another and connecting the housing front side (11) and the housing rear side (12), a housing underside (14) facing the surface (3) in the state of the inspection vehicle (1) being placed onto the surface (3), and an opposite housing top side (15).

5. The inspection vehicle (1) according to claim 4,
**characterised in that**
the direction of movement (38) of the at least one magnet (36) is transverse, in particular perpendicular, to the main direction of travel (10).

6. The inspection vehicle (10) according to claim 4 or 5,
**characterised in that**
the measurement instrument (7) is at least predominantly accommodated in the housing (6).

7. The inspection vehicle (1) according to claim 3 and one of claims 4 to 6,
**characterised in that**
the inspection vehicle (1) is designed to be inserted into an air gap between two opposite gap walls and to be placed onto and moved along the surface of a first gap wall as surface in order to check the first gap wall and/or the opposite second gap wall for damage, and
the camera (16) is located inside the housing (6) and points towards a mirror (17) located inside the housing (6) between two windows (18) provided opposite to one another on the housing underside (14) and housing top side (15) and being held pivotably, in particular by a motor, around a mirror pivot axis (19), such that the camera (16) views the first gap wall through the lower window (18) or the second gap wall through the upper window (18), depending on the pivot position of the mirror (17).

8. The inspection vehicle (1) according to claim 7,
**characterised in that**
the camera (16) can be moved back and forth relative to the mirror (17), in particular by a motor.

9. The inspection vehicle (1) according to claim 7 or 8,
**characterised in that**
the inspection vehicle (1) is designed to be inserted into the air gap between a rotor (2) defining the first gap wall and a stator of an electrical machine, in particular a generator, defining the second gap wall, and to be placed onto and moved along the substantially cylindrical outer circumference (3) of the rotor (2) in order to check the outer circumference (3) of the rotor (2) and/or the inner circumference of the stator for damage, and **in that**
the drive unit (8) comprises at least four drive groups (9) which are held in pairs opposite one another on the housing longitudinal sides (13),
each drive group (9) has at least two wheels (23) drivable, by separate motors (24), to rotate around wheel axles (25) extending parallel to one another and perpendicular to the main direction of travel (10), and
each drive group (9) is attached to an intermediate element (27), pivotable around a first pivot axis (26) extending parallel to the wheel axles (25),
which in turn is attached to the housing (6), pivotable around a second pivot axis (28) extending parallel to the first pivot axis (26) and pivotable up and down around a third pivot axis (29) extending perpendicular to the second pivot axis (28),
wherein the pivot movement of a drive group (9) around its third pivot axis (29) is coupled to the pivot movement of the opposite drive group (9) around its third pivot axis (29).

10. The inspection vehicle (1) according to claim 9,
**characterised in that**
at least one magnet (36) is located on the underside (14) of the housing (6) and/or
at least one magnet (36) is located on the underside of a drive group (9), in particular each drive group (9).

11. The inspection vehicle (1) according to claim 9 or 10,
**characterised in that**
the intermediate elements (27) of drive groups (9) located opposite to one another are coupled to one another via a lever mechanism (30) in such a way that when one of the two drive groups (9) is pivoted downwards around the third pivot axis (29) associated with it by a predetermined amount, the other of the two drive groups (9) is pivoted upwards around the third pivot axis (29) associated with it by a corresponding amount, and vice versa.

12. The inspection vehicle (1) according to any one of claims 9 to 11,
**characterised in that**
each drive group (9) has three wheels (23) located in pairs offset from one another in the main direction of travel (10) and/or in the direction of movement (38) of the magnets (36) and is each driven by separate motors (24) rotating about their wheel axles (25).

13. The inspection vehicle (1) according to any one of claims 9 to 12,
**characterised in that**
the measurement instrument (7) and the motors (24) are powered via at least one accumulator located within the housing (6).

14. The inspection vehicle (1) according to any one of the preceding claims,
**characterised in that**
its total height, when placed onto a flat surface (3), is less than 20 mm, preferably less than 16 mm.

## Revendications

1. Véhicule d'essai (1),
qui est conçu pour être placer et déplacer sur un substrat au moins partiellement ferromagnétique (3),
comprenant
- au moins une technique de mesure (7) destinée à détecter des propriétés physiques et/ou chimiques de l'environnement,
- une unité d'entraînement (8),
- au moins un support (37) et
- au moins un aimant (36),en particulier l'au moins un aimant étant en néodyme, qui est disposé sur la face inférieure du véhicule d'essai (1) et conçu pour maintenir le véhicule d'essai (1) sur le sol (3),
dans lequel au moins un aimant (36) est guidé librement à l'intérieur du support (37), en particulier un rail, dans une direction de déplacement (38),
plusieurs aimants (36) sont prévus, qui sont chacun guidés librement dans un support dans une direction de mouvement,
**caractérisé en ce**
**que** ses supports (37) sont disposés par paires dans une direction transversale, en particulier perpendiculaires à la direction de déplacement (38) des aimants (36) et/ou décalés les uns par rapport aux autres dans la direction de déplacement (38) des aimants (36).

2. Véhicule d'essai (1) selon la revendication 1,
**caractérisé en ce que**
la force, la disposition et/ou le nombre du ou des aimants (36) sont choisis de telle sorte que
que le véhicule d'essai (1) peut être déplacé au-dessus du sol (3).

3. Véhicule d'essai (1) selon l'une quelconque des revendications précédentes,
**caractérisé en ce que**
la technique de mesure (7) comprend au moins une caméra (16) et une unité d'éclairage pour éclairer la zone d'image qui comprend l'au moins une caméra (16),
dans lequel l'unité d'éclairage peut être intégrée dans la caméra (16).

4. Véhicule d'essai (1) selon l'une quelconque des revendications précédentes,
**caractérisé en ce que**
le véhicule d'essai (1) comprend un boîtier (6) qui est notamment sensiblement rectangulaire, la face avant du boîtier (11) faisant face à la direction principale de déplacement (10), un côté arrière de boîtier opposé (12), des côtés longitudinaux de boîtier (13) disposés en regard l'un de l'autre et reliant le côté avant de boîtier (11) et le côté arrière de boîtier (12), un côté inférieur de boîtier (14), qui, lorsque le véhicule d'essai (1) est posé sur le sol (3), pointe vers le sol (3) et présente un côté supérieur de boîtier opposé (15).

5. Véhicule d'essai (1) selon la revendication 4,
**caractérisé en ce que**
la direction de déplacement (38) du ou des aimants (36) est transversale, en particulier perpendiculairement à la direction principale de déplacement (10).

6. Véhicule d'essai (10) selon la revendication 4 ou 5, **caractérisé en ce que**
la technique de mesure (7) est au moins en grande partie logée dans le boîtier (6).

7. Véhicule d'essai (1) selon la revendication 3 et l'une quelconque des revendications 4 à 6,
**caractérisé en ce que**
le véhicule d'essai (1) est conçu pour être inséré dans un espace d'air entre deux parois d'espacement opposées et placé et déplacé sur la surface d'une première paroi d'espacement en tant que substrat afin de vérifier si la première paroi d'espacement et/ou la seconde paroi d'espacement opposée sont endommagées, et
la caméra (16) est disposée à l'intérieur du boîtier (6) et dirigé sur un miroir (17) qui est disposé à l'intérieur du boîtier (6) entre deux miroirs mutuellement opposés sur la face inférieure du boîtier (14) et disposée sur la face supérieure (15) du boîtier dans des fenêtres (18) et est maintenu pivotant autour d'un axe de pivotement du miroir (19), notamment par un moteur, de telle sorte que la caméra (16) visualise la première paroi de fente à travers la fenêtre inférieure (18) ou la deuxième paroi de fente à travers la fenêtre supérieure (18) en fonction de la position de pivotement du miroir (17).

8. Véhicule d'essai (1) selon la revendication 7,
**caractérisé en ce que**
la caméra (16) peut être déplacée en avant et en arrière par rapport au miroir (17), notamment par moteur.

9. Véhicule d'essai (1) selon l'une des revendications 7 à 8,
**caractérisé en ce que**
le véhicule d'essai (1) est conçu pour être inséré dans l'espacement entre un rotor (2) définissant la première paroi d'espacement et un stator d'une machine électrique, en particulier un générateur, définissant la deuxième paroi d'espacement, et pour être placé et déplacé sur la circonférence extérieure (3) sensiblement cylindrique du rotor (2) afin de vérifier l'absence de dommages sur la circonférence extérieure (3) du rotor (2) et/ou la circonférence intérieure du stator, et que
l'unité d'entraînement (8) comprend au moins quatre groupes d'entraînement (9), qui sont maintenus par paires opposées l'une à l'autre sur les côtés longitudinaux (13) du boîtier,
chaque groupe d'entraînement (9) comporte au moins deux roues (23) qui peuvent être entraînées en rotation par des moteurs séparés (24) autour d'axes de roues (25) s'étendant parallèlement les uns aux autres et perpendiculairement à la direction de déplacement principale (10), et
chaque groupe d'entraînement (9) est monté de manière pivotante sur un élément intermédiaire (27) autour d'un premier axe de pivotement (26) s'étendant parallèlement aux axes de roues (25),
qui à son tour est monté de manière pivotante sur le boîtier (6) autour d'un deuxième axe de pivotement (28) s'étendant parallèlement au premier axe de pivotement (26) et pouvant pivoter de haut en bas autour d'un troisième axe de pivotement (29) s'étendant perpendiculairement au deuxième axe de pivotement (28),
dans lequel le mouvement de pivotement d'un groupe d'entraînement (9) autour de son troisième axe de pivotement (29) est couplé au mouvement de pivotement du groupe d'entraînement opposé (9) autour de son troisième axe de pivotement (29).

10. Véhicule d'essai (1) selon la revendication 9,
**caractérisé en ce**
**qu'**au moins un aimant (36) est disposé sur la face inférieure (14) du boîtier (6) et/ou
au moins un aimant (36) est disposé sur la face inférieure d'un groupe d'entraînement (9), en particulier de chaque groupe d'entraînement (9).

11. Véhicule d'essai (1) selon la revendication 9 ou 10,
**caractérisé en ce que**
**caractérisé en ce que** les éléments intermédiaires (27) de groupes d'entraînement (9) disposés en vis-à-vis sont couplés l'un à l'autre par l'intermédiaire d'un mécanisme à levier (30) de telle manière que lorsque l'un des deux groupes d'entraînement (9) est pivoté vers le bas d'une quantité prédéterminée autour du troisième axe de pivotement (29) qui lui est associé, l'autre des deux groupes d'entraînement (9) est pivoté vers le haut d'une quantité correspondante autour du troisième axe de pivotement (29) qui lui est associé, et vice versa.

12. Véhicule d'essai (1) selon l'une des revendications 9 à 11,
**caractérisé en ce que**
chaque groupe d'entraînement (9) comporte trois roues (23), qui sont disposés par paires dans la direction principale de déplacement (10) et/ou sont disposés de manière décalée les unes par rapport aux autres dans la direction de déplacement (38) des aimants (36) et chacune étant entraînée par des moteurs séparés (24) tournant autour de leurs axes de roues (25).

13. Véhicule d'essai (1) selon l'une quelconque des revendications 9 à 12,
**caractérisé en ce que**
la technique de mesure (7) et les moteurs (24) sont alimentés en énergie par l'intermédiaire d'au moins un accumulateur disposé à l'intérieur du boîtier (6).

14. Véhicule d'essai (1) selon l'une quelconque des revendications précédentes,
**caractérisé en ce que**
sa hauteur totale, lorsqu'il est placé sur une surface plane (3), est inférieure à 20 mm, mieux encore inférieure à 16 mm.
